(19) Europäisches Patentamt European Patent Office Office européen des brevets

(11) **EP 1 792 157 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(21) Anmeldenummer: **05775829.4**

(22) Anmeldetag: **19.08.2005**

(51) Int Cl.:
*G01M 3/20* ^(2006.01)     *G01M 3/22* ^(2006.01)

(86) Internationale Anmeldenummer:
**PCT/EP2005/054110**

(87) Internationale Veröffentlichungsnummer:
**WO 2006/032591 (30.03.2006 Gazette 2006/13)**

(54) **LECKPRUEFVERFAHREN UND LECKPRUEFVORRICHTUNG MIT PARTIALDRUCKSENSOR**

LEAK TESTING METHOD AND LEAK TESTING DEVICE COMPRISING A PARTIAL PRESSURE SENSOR

PROCEDE ET DISPOSITIF DE DETECTION DE FUITE A CAPTEUR DE PRESSION PARTIELLE

(84) Benannte Vertragsstaaten:
**DE FR GB SE**

(30) Priorität: **22.09.2004 DE 102004045803**

(43) Veröffentlichungstag der Anmeldung:
**06.06.2007 Patentblatt 2007/23**

(73) Patentinhaber: **Inficon GmbH**
**50968 Köln (DE)**

(72) Erfinder:
• **GROSSE BLEY, Werner**
**53125 Bonn (DE)**
• **WETZIG, Daniel**
**50999 Köln (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**DE-A1- 2 926 112     DE-A1- 10 304 996**
**US-A- 4 419 882     US-A- 5 386 717**
**US-A1- 2003 047 465**

**Beschreibung**

Die Erfindung betrifft ein Leckprüfverfahren, bei welchem ein hohles Prüfobjekt, das mit einem Prüfgas gefüllt ist, in eine Kammer eingebracht wird, wobei das aus dem Prüfobjekt austretende Prüfgas von einem Gassensor detektiert wird.

Die Europäische Norm DIN EN 13185 "Dichtheitsprüfung" beschreibt verschiedene Verfahren zur Dichtheitsprüfung. Hierzu gehören Verfahren der Gruppe B: Prüfgasstrom aus dem Prüfobjekt. Bei dem Verfahren B.3 handelt es sich um ein Überdruckverfahren mit Ansammlung. Das mit Prüfgas unter Druck gefüllte Prüfobjekt befindet sich in einer gasdichten Umhüllung. Nach einer bestimmten Zeit wird das angesammelte Prüfgas mit einem Leckdetektor, der an die Umhüllung angeschlossen ist, gemessen. Die Leckgröße kann dann abgeschätzt werden oder bestimmt werden, falls Volumen und Druck der Umhüllung bekannt sind. Bei dem Verfahren B.6 handelt es sich um ein Vakuumverfahren. Kleine Objekte, die mit Prüfgas gefüllt sind, werden in eine Kammer gesetzt. Diese wird dann bis auf einen Druck evakuiert, der unter dem inneren Druck des Prüfobjekts liegt. Der Leckdetektor wird an die Vakuumkammer angeschlossen. Der Gesamtprüfgasstrom aus dem Prüfobjekt wird mit dem Leckdetektor gemessen. Diese Europäische Norm und die darin definierten Verfahren sind in dem Aufsatz "Neue Norm zur Auswahl eines geeigneten Verfahrens zur Lecksuche und Dichtheitsprüfung" von Gerhard Schröder in ZfP - Zeitung 74, April 2001, Seiten 31-39, erläutert. Bei den Verfahren B. 3 und B.6 ist es erforderlich, in der Umhüllung des Prüfobjekts ein Hochvakuum zu erzeugen, damit der Leckdetektor, der ein Massenspektrometer aufweist, betriebsfähig ist. Ein Massenspektrometer erfordert die Erzeugung eines Hochvakuums, wozu aufwendige Pumpen, wie Turbomolekularpumpen und Reibungsmolekularpumpen benötigt werden. Derartige Lecksuchgeräte sind zwar hochempfindlich, erfordern jedoch einen sehr großen vakuumtechnischen Aufwand.

Bei dem Überdruckverfahren wird die Leckrate $q_G$ des Prüfobjektes nach der folgenden Gleichung berechnet:

$$q_G = p \bullet \frac{V \bullet (c_1 - c_0)}{(t_1 - t_0)}$$

Dabei ist:

$q_G$　　die Gesamtleckagerate, in Pascalkubikmetern je Sekunde;

$p, V$　　der Druck und das Volumen der zusätzlichen Umhüllung, jeweils in Pascal und Kubikmetern;

$c_0, c_1$　　die Volumenkonzentrationen zur Zeit $t_1$ und $t_2$, jeweils bei Beginn und Ende der Messung in der zusätzlichen Umhüllung;

$t_0, t_1$　　die Zeitpunkte .jeweils bei Beginn und Ende der Messung.

Hierbei ist also die Kenntnis des Totaldrucks p in der Umhüllung (Kammer) erforderlich, da die Konzentration c gemessen wird. Erst das Produkt aus Totaldruck und Konzentration ergibt den Partialdruck p* des Prüfgases ($p \bullet c = p^*$). Außerdem muss der Totaldruck konstant gehalten werden, da sonst der berechnete Partialdruck nicht proportional zur Leckrate ist.

In der Zeitschrift "ZfP - In Anwendung, Entwicklung und Forschung" ist ein Aufsatz "Laseroptische Messverfahren zur Dichtheitsprüfung mit Leckortung" über einen Beitrag auf der DGZfP-Jahrestagung 2001 in Berlin von Schroff und Stetter erschienen. Darin ist eine laseroptische Dichtheitsprüfung beschrieben. Aus der das Prüfobjekt enthaltenden Kammer wird Gas abgezogen und durch eine Nachweiskammer geleitet. Die Kammer enthält als Füllgas Luft und das Prüfobjekt enthält als Prüfgas Schwefelhexafluorid ($SF_6$), das die Strahlung eines $CO_2$-Wellenleiterlasers selektiv absorbiert. Der Laserstrahl wird durch das in der Nachweiskammer befindliche Gas hindurch geleitet und die Absorption des Laserstrahles wird gemessen. Ein derartiges Verfahren erfordert eine aufwendige Nachweiskammer und Laserapparatur. Die Nachweiskammer ist an eine Vakuumpumpe angeschlossen.

In DE 100 31 882 A1 (Leybold Vakuum GmbH) ist ein Partialdrucksensor für Helium oder Wasserstoff beschrieben, der eine Kammer aufweist, die mit einer Membran aus einem Siliziumwerkstoff mit den gewünschten selektiven Durchlässigkeitseigenschaften abgeschlossen ist. In der Kammer des Sensors befindet sich ein Penning-Drucksensor aus Kathodenplatten, zwischen denen ein Anodenring angeordnet ist. Ein Permanentmagnet erzeugt das für die Penning-Entladung notwendige Magnetfeld. Ein Penning-Drucksensor liefert anhand des zwischen den Kathodenplatten und dem Anodenring fließenden Stroms einen Wert für den Totaldruck. Die Membran bewirkt, dass nur bestimmte Gase wie Helium oder Wasserstoff in die Sensorkammer eindringen. Eine ähnliche Beschreibung eines Partialdrucksensors findet sich in der Patentanmeldung DE 10 2004 034 381.

DE 103 04 996 A1 offenbart ein Verfahren zur Dichtigkeitsprüfung, bei dem in einer geschlossenen Prüfkammer ohne Anlegen eines Vakuums der Austritt von Prüfgas durch ein Leck sensiert wird.

In DE 29 26 112 A1 ist eine Testleck-Sonde beschrieben, die auf zwei Arten benutzt wird. Eine erste Benutzungsart sieht vor, dass die Sonde in die Wand des Gehäuses eines Prüflings eingesetzt wird, dessen Innenraum mit dem Testgas Helium beaufschlagt wird. Der Prüfling wird in eine Vakuumkammer eingesetzt, die mit einem Helium-Massenspektrometer verbunden ist und einen Vakuumanschluss aufweist. Eine zweite Benutzungsart der Sonde sieht vor, dass ein Behälter, der ein Gasgemisch enthält, über die Sonde an eine Vakuumleitung angeschlossen wird, die mit einem Massenspektrometer verbunden ist. Auf diese Weise soll der Helium-Partialdruck im Gasgemisch gemessen werden. In beiden Fällen ist die Erzeugung eines hohen Vakuums erforderlich.

U.S. 5,386,717 A beschreibt ein Gasleck-Testverfahren, bei dem eine Kammer mit einer Vakuumeinheit verbunden ist, um in der Kammer ein Vakuum zu erzeugen. Die Kammer enthält einen Probenbehälter, der mit einer Heliumquelle verbunden ist. An die Kammer ist ein Leckdetektor angeschlossen. In die Kammer wird ein Füllgas eingelassen. Vor Durchführung der Messung wird die Kammer evakuiert und anschließend wird ein Schutzgas in die Kammer eingelassen. Diese Zyklen werden einige Male wiederholt, um die Kammer von Testgas zu reinigen. Erst danach erfolgt die eigentliche Leckprüfung. Dieses Verfahren ist sehr zeitaufwendig und kann nur für außergewöhnliche Messzwecke akzeptiert werden. Die Gasdetektion erfolgt unter Vakuum unter Einsatz einer Turbomolekularpumpe.

U.S. 4,419,882 beschreibt einen Heliumdetektor, der an einem Saugeinlass eine permeable Membran aufweist, die den Partialdruck von Luft in dem Rohr eines Massenspektrometers nicht beeinflusst. Das Massenspektrometer erfordert ein Hochvakuum. Die permeable Membran ist für Helium durchlässig, so dass beim Ansaugen von Helium die Heliumkonzentration im Tubus des Massenspektrometers steigt. Die Membran unterdrückt die Permeation von Luft in die Kammer. Auf diese Weise erhöht sich der Helium-Partialdruck, der durch das Massenspektrometer bestimmt wird. Das Einbringen eines hohlen Prüfobjekts in eine Kammer ist nicht vorgesehen, ebenfalls nicht das Füllen einer Kammer mit einem Füllgas.

U.S. 2003/047465 A1 betrifft ein Verfahren zur Leckerkennung in den Wänden eines Testobjekts. Änderungen des Partialdruckes von Sauerstoff werden unter Verwendung eines Sauerstoffsensors detektiert und ausgewertet.

Der Erfindung liegt die Aufgabe zugrunde, ein Leckprüfverfahren und eine entsprechende Leckprüfvorrichtung anzugeben, mit denen auf einfache Weise und ohne Erzeugung eines Hochvakuums eine Leckprüfung vorgenommen werden kann.

Eine erste Variante des erfindungsgemäßen Leckprüfverfahrens ist durch den Patentanspruch 1 bezeichnet. Bei dieser ersten Variante wird die Kammer hermetisch verschlossen, so dass ein bleibendes Füllgasvolumen in der Kammer gebildet wird. Als Gassensor wird ein Partialdrucksensor verwendet, dessen Membran in der Kammer angeordnet ist. Bei diesem Verfahren wird der Kammer kein Gas entnommen, also weder Füllgas noch etwaiges darin enthaltenes Prüfgas. Das in der Kammer enthaltene Gasvolumen bleibt in der hermetisch abgeschlossenen Kammer und wird nicht zu Prüf- oder Messzwecken aus der Kammer entnommen. Ein wesentlicher Vorteil des Leckprüfverfahrens besteht darin, dass die Leckprüfung bei einem beliebigen Druck vorgenommen werden kann, also beispielsweise bei Atmosphärendruck oder geringem Unterdruck oder auch bei zeitlich variierendem Druck. Jedenfalls braucht kein Vakuum erzeugt zu werden. Vakuum im Rahmen der vorliegenden Beschreibung bedeutet generell einen Druck von weniger als 1 mbar, obwohl der Druck, der zum Betreiben eines Massenspektrometers erforderlich wäre, noch viel tiefer liegt ($10^{-4}$ mbar).

Als Füllgas für die Kammer kann Luft verwendet werden. Es ist dann lediglich erforderlich, die Kammer dicht zu verschließen, ohne sie zu evakuieren. Als Prüfgas können Edelgase verwendet werden, insbesondere Helium oder Wasserstoff.

Helium und Wasserstoff bieten den Vorteil, dass sie mit einem relativ einfachen Partialdrucksensor detektiert und mengenmäßig erfasst werden können. Darüber hinaus eignet sich Helium besonders, weil es ein leichtes Gas ist, das selbst durch feinste Lecks austritt.

Ein besonderer Vorteil der ersten Variante der Erfindung besteht darin, dass an die Kammer keine Leitungen für den Gastransport angeschlossen werden müssen. Zwar kann eine Absaugung von Gas aus der Kammer vor dem Beginn der Partialdruckmessungen erfolgen, jedoch wird die eigentliche Messphase durchgeführt, ohne dass Gas aus der Kammer abgeleitet oder in die Kammer eingeleitet wird.

Es ist nicht erforderlich, den Partialdruck p* des Prüfgases in der Kammer anhand des Gesamtdruckes p und der Konzentration c nach der Formel p* = p•c zu berechnen, da der Partialdruck p* direkt vom Sensor gemessen wird.

Gemäß einer Weiterbildung der Erfindung ist vorgesehen, dass das Füllgas in der Kammer umgewälzt wird. Eine solche Umwälzung ist zweckmäßig, um zu erreichen, dass die Prüfgasatome sich gleichmäßig in dem Füllgas verteilen. Es wird verhindert, dass das Füllgas, das aus dem Prüfobjekt austritt, an dessen Oberfläche verbleibt.

Die Leckprüfung erfolgt vorzugsweise in der Art, dass der Partialdruck des Prüfgases am Anfang und am Ende einer Messperiode gemessen und aus der Differenz die Leckrate bestimmt wird. Bei der Bestimmung des Absolutwertes der Leckrate wird auch das Kammervolumen V berücksichtigt.

Im Rahmen der Erfindung ist es auch möglich, die Kammer mit einer Bypass-Leitung zu versehen, die einen Ventilator enthält und das Gas an einer Stelle der Kammer ansaugt und es an einer anderen Stelle wieder in die Kammer einführt, um die erforderliche Ventilation in der Kammer zu bewirken. In diesem Fall ist das Volumen der Bypass-Leitung Bestandteil des Kammervolumens.

Die Erfindung betrifft auch eine Leckprüfvorrichtung zur Durchführung der ersten Variante des erfindungsgemäßen Verfahrens. Diese Leckprüfvorrichtung zeichnet sich dadurch aus, dass in der Kammer die Membran eines Partialdrucksensors angeordnet ist, der auf das Prüfgas, nicht aber auf das Füllgas, anspricht.

Die Kammer kann eine Ventilatorvorrichtung enthalten, die - bezogen auf das Prüfobjekt - dem Partialdrucksensor gegenüber angeordnet ist. Der Partialdrucksensor kann in oder an einer Wand der Kammer angeordnet sein.

Eine zweite Variante des erfindungsgemäßen Verfahrens ist durch den Patentanspruch 9 bezeichnet. Hiernach wird das Füllgas durch die Kammer hindurch geleitet und an einem Füllgasauslass der Kammer - oder unmittelbar dahinter - ist ein Partialdrucksensor positioniert. Bei dem Füllgas handelt es sich auch hier vorzugsweise um Luft. Die Kammer wird kontinuierlich durchströmt, wobei der Partialdruck des Prüfgases am Auslass gemessen wird. Auf diese Weise wird die Anwesenheit von Prüfgas im Füllgas festgestellt und ein präzises Maß für die Größe und Gesamtleckrate des Prüfobjekts erhalten. Eine Kalibrierung mit einem Prüfobjekt mit bekannter Leckrate ist möglich.

Bei der zweiten Variante wird vorzugsweise in der Kammer ein Druck aufrechterhalten, der kleiner ist als der Atmosphärendruck, jedoch größer als 1 mbar, so dass der erzeugte Füllgasstrom eine nicht-molekulare Strömung bildet. Der Füllgasstrom soll eine gleichmäßige Verteilung des in die Kammer gelangten Prüfgases bewirken. Er dient als Trägergas, durch welches das ausgetretene Prüfgas dem Partialdrucksensor zugeführt wird. Die Strömung ist vorzugsweise turbulent. Es handelt sich in jedem Fall um eine viskose Gasströmung, im Unterschied zu einer molekularen Strömung, die durch Hochvakuumpumpen im Hochvakuum erzeugt wird und für die die Gesetze viskoser Gasströmungen nicht gelten,

Eine Leckprüfvorrichtung gemäß der zweiten Variante der Erfindung weist eine Kammer mit einem Gaseinlass und einem Gasauslass auf. An dem Gasauslass - oder unmittelbar dahinter - ist ein Partialdrucksensor angeordnet. Der Gasauslass kann mit einem Sauggebläse verbunden sein, das die erforderliche Durchströmung der Kammer zum Mitreißen von aus dem Prüfobjekt ausgetretenem Prüfgas bewirkt. Ein derartiges Sauggebläse kann nach Art eines üblichen Ventilators aufgebaut sein. Es dient lediglich der Erzeugung einer Gasströmung und nicht der Erzeugung eines definierten Vakuums. Der Gasstrom kann auch durch Beaufschlagung mit Überdruck (ohne Saugventilator) erzeugt werden.

Es ist keine Regelung des Gasstroms erforderlich, da der Partialdruck des Prüfgases gemessen wird. Durch Änderung des Gasstromes ändert sich lediglich der Totaldruck, was keinen Einfluss auf die Messung des Prüfgaspartialdrucks hat.

Im folgenden werden unter Bezugnahme auf die Zeichnungen Ausführungsbeispiele der Erfindung näher erläutert.

Es zeigen:

Fig. 1      eine schematische Darstellung einer Leckprüfvorrichtung nach der ersten Variante der Erfindung,

Fig. 2      ein modifiziertes Detail aus Fig. 1, mit in der Wand der Kammer an- geordnetem Partialdrucksensor, und

Fig. 3      eine schematische Darstellung einer Leckprüfvorrichtung nach der zweiten Variante der Erfindung.

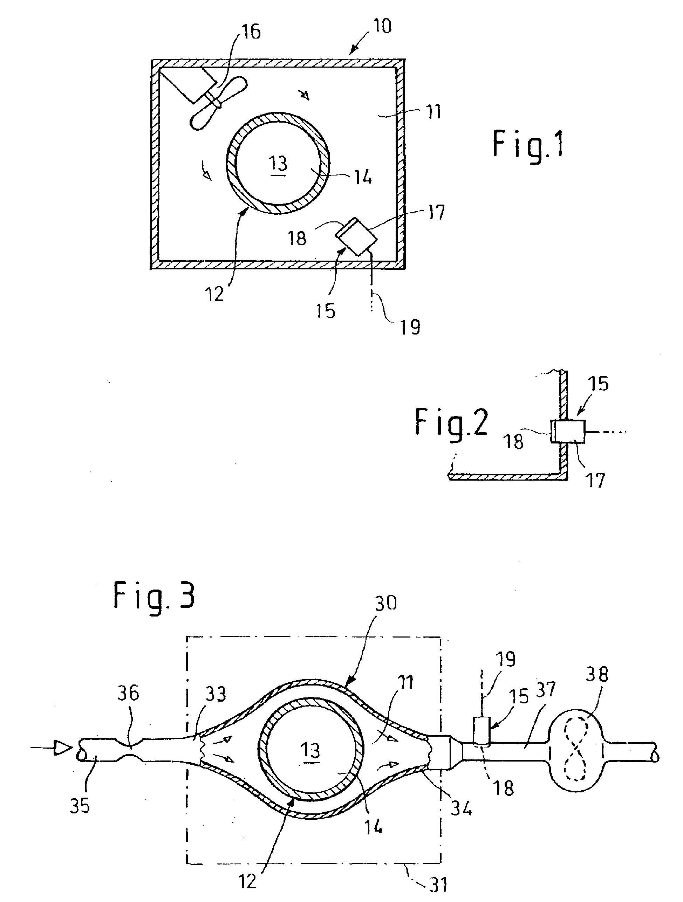

Gemäß Fig. 1 ist in einer Kammer 10, die hermetisch gegen die umgebende Atmosphäre abgeschlossen ist, ein Füllgas 11 enthalten. Das Füllgas 11 ist in der Regel Luft. Die Kammer 10 kann einen abnehmbaren Deckel aufweisen, durch den Zugang zu der Kammer besteht und der nach dem Einbringen des Prüfobjekts dicht verschlossen wird. In der Kammer 10 kann derselbe Druck herrschen wie in der umgebenden Atmosphäre; es ist jedoch auch möglich, den Druck in der Kammer abzusenken, jedoch nicht unter 1 mbar, weil dann eine Gasventilation in der Kammer nicht mehr möglich wäre.

In die Kammer 10 wird ein Prüfobjekt 12 eingebracht. Das Prüfobjekt 12 ist ein Hohlkörper, dessen Hohlraum 13 mit einem Prüfgas 14 gefüllt ist, beispielsweise Helium. Wenn das Prüfobjekt 12 ein Leck aufweist, tritt Helium in die Kammer 10 hinein aus. Das Austreten des Prüfgases wird durch den Gassensor 15 detektiert. Dabei kann auch die Leckrate, also der pro Zeiteinheit austretende Mengenstrom an Prüfgas, bestimmt werden.

In der Kammer ist eine Ventilatorvorrichtung 16 montiert, die das Füllgas 11 antreibt und eine Gasströmung erzeugt, welche auf das Prüfobjekt 12 gerichtet ist und daran entlang streicht. Auf der gegenüberliegenden Seite der Kammer ist der Gassensor 15 angeordnet. Hierbei handelt es sich um einen Partialdrucksensor, der selektiv auf die Anwesenheit von Prüfgas reagiert, nicht aber auf das Füllgas. Der Gassensor 15 ist im Einzelnen beschrieben in DE 100 31 882 A1 und in DE 10 2004 034 381. Er weist ein gasdichtes Gehäuse 17 auf, das becherförmig ausgebildet ist und das an einer Stirnseite durch eine Membran 18 verschlossen ist. Das Gehäuse 17 besteht in der Regel aus Glas und die Membran 18 besteht aus einem Halbleitermaterial, insbesondere Siliziumoxid. Auf der Membran sind zahlreiche Heizwendeln ausgebildet, die an eine Stromquelle angeschlossen sind, um die Membran zu beheizen. Die Membran 18 ist mit dem aus dem gleichen Grundmaterial bestehenden Gehäuse 17 verbunden, so dass der Innenraum des Gehäuses dicht verschlossen ist. Die Membran ist für einzelne Gase wie Helium oder Wasserstoff selektiv durchlässig. In dem Gehäuse 17 befindet sich ein Penning-Drucksensor, der den Gesamt-Gasdruck im Gehäuse 17 misst. Da lediglich Prüfgas durch die Membran 18 in das Gehäuse 17 eintreten kann, entspricht der gemessene Gasdruck dem Partial-Gasdruck des Prüfgases. An einer Leitung 19 wird ein elektrisches Signal ausgegeben, das dem Partialdruck entspricht.

Die beschriebene Vorrichtung eignet sich dazu, dass Vorhandensein eines Lecks am Prüfobjekt 12 zu detektieren. Darüber hinaus ist auch die Bestimmung der Leckrate Q möglich. Hierzu wird die Veränderung des Partialdrucks p innerhalb einer Messperiode $t_p$ ermittelt. Die Leckrate ergibt sich zu

$$ Q = V \cdot \frac{\Delta_{p^*}}{t_p} $$

Hierin ist $A_{p^*}$ die Erhöhung (Veränderung) des Partialdrucks p* innerhalb der Messperiode $t_p$ und V das Volumen der Kammer 10.

Während gemäß Fig. 1 der Gassensor 15 im Innern der Kammer 10 montiert ist, zeigt Fig. 2 eine Ausführungsform, bei der der Gassensor 15 in die Wand der Kammer integriert ist, wobei die Membran 18 zum Innenraum der Kammer hin freiliegt.

In Fig. 3 ist ein Ausführungsbeispiel der zweiten Variante der Erfindung dargestellt. Hierbei ist eine Kammer 30 vorgesehen, die der Form und Größe des Prüfobjekts 12 im wesentlichen angepasst ist, so dass ein die Kammer durchströmender Gasstrom eng an dem Prüfobjekt 12 entlang streicht. Die Kammer 30 ist an einem Rahmen 31 montiert, der die Kammer trägt und unterschiedliche Gestaltungen der Kammer zulässt.

Die Kammer 30 weist an einem Ende einen Füllgaseinlass 33 und am gegenüberliegenden Ende einen Füllgasauslass 34 auf. Das Füllgas wird dem Füllgaseinlass 33 über eine Zuströmleitung 35, die eine feste Drosselstelle 36 enthält, zugeführt. Der Füllgasauslass 34 ist mit einer Auslassleitung 37 verbunden, die ein Sauggebläse 38 enthält.

Das Sauggebläse 38 zieht Umgebungsluft durch die Kammer 30 in kontinuierlichem Strom hindurch. Durch die Drosselstelle 36 wird ein leichter Unterdruck in der Kammer 30 erzeugt. Der Unterdruck braucht nicht konstant gehalten und somit auch nicht geregelt zu werden.

Am Füllgasauslass 34 - oder unmittelbar dahinter - ist ein Gassensor 15 angeordnet, dessen Membran 18 sich in der Gasleitung befindet. Der Gassensor 15 ist ein Partialdrucksensor wie er anhand von Fig. 1 beschrieben wurde.

Die Leckprüfvorrichtung nach Fig. 3 arbeitet wie folgt:

Das mit dem Prüfgas 14 gefüllte Prüfobjekt 12 wird in die Kammer 30 eingebracht und diese wird verschlossen. Dann wird das Sauggebläse 38 eingeschaltet, wodurch Umgebungsluft als Füllgas in die Zuströmleitung 35 eingesaugt wird und durch die Kammer 30 strömt. Im Falle eines Lecks im Prüfobjekt 12 nimmt das Füllgas Prüfgas 14 auf. Das Vorhandensein von Prüfgas 14 wird durch den Gassensor 15, der ein Partialdrucksensor ist, erkannt.

Bei dem Ausführungsbeispiel von Fig. 3 wird der Luftstrom von dem Sauggebläse 38 durch die Kammer 30 hindurch gesaugt. Alternativ besteht auch die Möglichkeit, anstelle eines Sauggebläses ein Gebläse zu verwenden, das in Strömungsrichtung vor der Kammer 30 angeordnet ist. Eine Drosselstelle befindet sich dann in Strömungsrichtung hinter der Kammer.

Die Erfindung bietet ein einfaches und kostengünstiges Leckprüfverfahren, das sich insbesondere für die Prüfung industriell gefertigter Prüfobjekte eignet, und zwar sowohl für Einzelprüfung als auch für die Massenprüfung.

**Patentansprüche**

1. Leckprüfverfahren, bei welchem ein hohles Prüfobjekt (12), das mit einem Prüfgas (14) gefüllt ist, in eine Kammer (10) eingebracht wird, die zunächst eine von Prüfgas freie Gasatmosphäre aus einem Füllgas (11) enthält, wobei das Austreten von Prüfgas (14) aus dem Prüfobjekt (12) durch einen Gassensor (15) erkannt wird, der auf das Prüfgas, nicht aber auf das Füllgas, anspricht **dadurch gekennzeichnet, dass** die Kammer (10) hermetisch verschlossen wird, so dass ein bleibendes Füllgasvolumen gebildet wird, und dass als Gassensor (15) ein Partialdrucksensor mit einer selektiv für das Prüfgas (14) durchlässigen Membran (18) verwendet wird, dessen Membran (18) in der Kammer (10) angeordnet ist.

2. Leckprüfverfahren nach Anspruch 1, **dadurch gekennzeichnet, dass** das Füllgas (11) in der Kammer (10) umgewälzt wird.

3. Leckprüfverfahren nach Anspruch 1 oder 2, **dadurch gekennzeichnet, dass** das Füllgas (11) in der Kammer (10) derart angetrieben wird, dass eine an dem Prüfobjekt (12) entlang strömende Strömung erzeugt wird, die Prüfgasmoleküle von dem Prüfobjekt ablöst.

4. Leckprüfverfahren nach einem der Ansprüche 1-3, **dadurch gekennzeichnet, dass** der Gassensor (15) in einer Wand der Kammer (10) angeordnet ist.

5. Leckprüfverfahren nach einem der Ansprüche 1-4, **dadurch gekennzeichnet, dass** der Partialdruck des Prüfgases (14) am Anfang und am Ende einer

Messperiode ($t_p$) gemessen und aus der Differenz die Leckrate Q bestimmt wird.

6. Leckprüfvorrichtung mit einer mit einem Füllgas (11) befüllbaren hermetisch abschließbare Kammer (10), die ein mit dem Prüfgas (14) gefülltes Prüfobjekt (12) aufnimmt, **dadurch gekennzeichnet, dass** in der Kammer (10) die Membran (18) eines Partialdrucksensors angeordnet ist, der auf das Prüfgas (14), nicht aber auf das Füllgas (11), anspricht.

7. Leckprüfvorrichtung nach Anspruch 6, **dadurch gekennzeichnet, dass** die Kammer (10) eine Ventilatorvorrichtung (16) enthält, die - bezogen auf das Prüfobjekt (12) - dem Partialdrucksensor (15) gegenüber angeordnet ist.

8. Leckprüfvorrichtung nach Anspruch 6 oder 7, **dadurch gekennzeichnet, dass** der Partialdrucksensor (15) in oder an einer Wand der Kammer (10) angeordnet ist.

9. Leckprüfverfahren, bei welchem ein hohles Prüfobjekt (12), das mit einem Prüfgas (14) gefüllt ist, in eine Kammer (30) eingebracht wird, die zunächst eine von Prüfgas freie Gasatmosphäre aus einem Füllgas (11) enthält, wobei das Austreten von Prüfgas aus dem Prüfobjekt (12) durch einen Gassensor (15) erkannt wird, **dadurch gekennzeichnet, dass** das Füllgas (11) durch die Kammer (30) hindurch geleitet wird, und dass an einem Füllgasauslass (34) der Kammer - oder unmittelbar dahinter - ein Partialdrucksensor (15) positioniert wird, der eine selektiv für das Prüfgas (14) durchlässige Membran (18) aufweist.

10. Leckprüfverfahren nach Anspruch 9, **dadurch gekennzeichnet, dass** in der Kammer (30) ein Druck aufrechterhalten wird, der kleiner ist als der Atmosphärendruck, jedoch größer als 1 mbar, so dass der erzeugte Füllgasstrom eine nicht-molekulare Strömung bildet.

11. Leckprüfvorrichtung mit einer Kammer (30), die ein mit einem Prüfgas (14) gefülltes Prüfobjekt (12) aufnimmt und einen Füllgaseinlass (33) und einen Füllgasauslass (34) aufweist, **dadurch gekennzeichnet, dass** an dem Füllgasauslass (34) - oder unmittelbar dahinter - ein Partialdrucksensor (15) mit einer selektiv für das Prüfgas (14) durchlässigen Membran (18) angeordnet ist.

12. Leckprüfvorrichtung nach Anspruch 11, **dadurch gekennzeichnet, dass** der Füllgasauslass (34) mit einem Sauggebläse (38) verbunden ist.

13. Leckprüfvorrichtung nach Anspruch 11 oder 12, **dadurch gekennzeichnet, dass** der Füllgaseinlass (33) mit einer Drosselstelle (36) versehen ist.

14. Leckprüfvorrichtung nach Anspruch 11, **dadurch gekennzeichnet, dass** der Füllgaseinlass (33) mit einem Druckerzeuger verbunden ist.

## Claims

1. A leak testing method, wherein a hollow test object (12) filled with a tracer gas (14) is placed into a chamber (10) which initially contains a tracer gas-free filling gas (11) atmosphere, wherein the leakage of tracer gas (14) from the test object (12) is detected by a gas sensor (15) which responds to the tracer gas but not to the filler gas,
**characterized in that**
the chamber (10) is hermetically sealed such that a constant filler gas volume is produced, and that as gas sensor (15) a partial-pressure sensor comprising a membrane (18) selectively permeable to the tracer gas (14) is used, said membrane (18) being arranged in the chamber (10).

2. The leak testing method according to claim 1, **characterized in that** the filler gas (11) is circulated in the chamber (10).

3. The leak testing method according to claim 1 or 2, **characterized in that** the filler gas (11) in the chamber (10) is driven such that a flow sweeping along the test object (12) is produced which detaches tracer gas molecules from the test object.

4. The leak testing method according to any one of claims 1-3, **characterized in that** the gas sensor (15) is arranged in a wall of the chamber (10).

5. The leak testing method according to any one of claims 1-4, **characterized in that** the partial pressure of the tracer gas (14) is measured at the beginning and the end of a measuring period ($t_p$), and the leak rate Q is determined from the difference.

6. A leak testing device comprising a chamber (10) adapted to be filled with a filler gas (11) and to be hermetically sealed, said chamber accommodating a test object (12) filled with the tracer gas (14), **characterized in that** in the chamber (10) the membrane (18) of a partial-pressure sensor is arranged which responds to the tracer gas (14) but not to the filler gas (11).

7. The leak testing device according to claim 6, **characterized in that** the chamber (10) comprises a fan device (16) which, relative to the test object (12), is arranged opposite the partial-pressure sensor (15).

**8.** The leak testing device according to claim 6 or 7, **characterized in that** the partial-pressure sensor (15) is arranged in or at a wall of the chamber (10).

**9.** A leak testing method, wherein a hollow test object (12) filled with a tracer gas (14) is placed into a chamber (30) which initially contains a tracer gas-free filling gas (11) atmosphere, wherein the leakage of tracer gas from the test object (12) is detected by a gas sensor (15), **characterized in that** the filler gas (11) passes through the chamber (30), and that at a filler gas outlet (34) of the chamber, or immediately behind said outlet, a partial-pressure sensor (15) is positioned which comprises a membrane (18) selectively permeable to the tracer gas (14).

**10.** The leak testing method according to claim 9, **characterized in that** in the chamber (30) a pressure is maintained which is lower than the atmospheric pressure but higher than 1 mbar such that the generated filler gas flow forms a non-molecular flow.

**11.** A leak testing device having a chamber (30) which accepts a test object (12) filled with a tracer gas (14) and comprises a filler gas inlet (33) and a filler gas outlet (34), **characterized in that** at the filler gas outlet (34), or immediately behind said outlet, a partial-pressure sensor (15) is arranged which comprises a membrane (18) selectively permeable to the tracer gas (14).

**12.** The leak testing device according to claim 11, **characterized in that** the filler gas outlet (34) is connected with a suction fan (38).

**13.** The leak testing device according to claim 11 or 12, **characterized in that** the filler gas inlet (33) is provided with a constriction (36).

**14.** The leak testing device according to claim 11, **characterized in that** the filler gas inlet (33) is connected with a pressure generator.

**Revendications**

**1.** Procédé de détection de fuite, dans lequel un objet de test (12) creux, rempli d'un gaz traceur (14), est placé dans une chambre (10) contenant d'abord une atmosphère de gaz sans gaz traceur et formée d'un gaz de remplissage (11), la fuite de gaz traceur (14) dudit objet de test (12) étant détectée par un capteur de gaz (15) répondant au gaz traceur mais non pas au gaz de remplissage, **caractérisé en ce que** la chambre (10) est fermée hermétiquement de sorte qu'un volume permanent de gaz de remplissage est formé, et que l'on utilise comme capteur de gaz (15) un capteur de pression partielle comprenant une membrane (18) sélectivement perméable au gaz traceur (14), ladite membrane (18) étant disposée dans la chambre (10).

**2.** Procédé de détection de fuite selon la revendication 1, **caractérisé en ce que** le gaz de remplissage (11) est refoulé dans la chambre (10).

**3.** Procédé de détection de fuite selon la revendication 1 ou 2, **caractérisé en ce que** le gaz de remplissage (11) est entrainé dans la chambre (10) de sorte qu'un écoulement est produit qui s'écoule le long de l'objet de test (12), détachant des molécules de gaz traceur dudit objet de test.

**4.** Procédé de détection de fuite selon l'une quelconque des revendications 1 à 3, **caractérisé en ce que** le capteur de gaz (15) est placé dans une paroi de ladite chambre (10).

**5.** Procédé de détection de fuite selon l'une quelconque des revendications 1 à 4, **caractérisé en ce que** la pression partielle du gaz traceur (14) est mesurée au commencement et à la fin d'une période de mesurage ($t_p$) et que le taux de fuite Q est déterminée sur la base de la différence.

**6.** Dispositif de détection de fuite comprenant une chambre (10) propre à être remplie par un gaz de remplissage (11) et à être fermée hermétiquement, la chambre recevant un objet de test (12) rempli d'un gaz traceur (14), **caractérisé en ce que** la membrane (18) d'un capteur de pression partielle est placée dans la chambre (10), qui répond au gaz traceur (14), mais non pas au gaz de remplissage (11).

**7.** Dispositif de détection de fuite selon la revendication 6, **caractérisé en ce que** ladite chambre (10) comprend un dispositif ventilateur (16) qui - par rapport à l'objet de test (12) - est positionné opposé au capteur de pression partielle (15).

**8.** Dispositif de détection de fuite selon la revendication 6 ou 7, **caractérisé en ce que** le capteur de pression partielle (15) est placé dans ou sur une paroi de la chambre (10).

**9.** Procédé de détection de fuite, dans lequel un objet de test (12) creux, rempli d'un gaz traceur (14), est placé dans une chambre (30) contenant d'abord une atmosphère de gaz sans gaz traceur et formée d'un gaz de remplissage (11), la fuite de gaz traceur dudit objet de test (12) étant détectée par un capteur de gaz (15), **caractérisé en ce que** le gaz de remplissage (11) est passé à travers la chambre (30) et qu'un capteur de pression partielle (15) est positionné à une sortie de gaz de remplissage (34) de la chambre - ou immédiatement derrière ladite sortie - le capteur comprenant une membrane (18) sélectivement perméable au gaz traceur (14).

**10.** Procédé de détection de fuite selon la revendication 9, **caractérisé en ce qu'**une pression est maintenue dans la chambre (30), qui est inférieure à la pression atmosphérique, mais supérieure à 1 mbar, de manière que l'écoulement de gaz de remplissage produit forme un écoulement non-moléculaire.

**11.** Dispositif de détection de fuite comprenant une chambre (30) recevant un objet de test (12) rempli d'un gaz traceur (14) et une entrée de gaz de remplissage (33) et une sortie de gaz de remplissage (34), **caractérisé en ce qu'**un capteur de pression partielle (15) est positionné à la sortie de gaz de remplissage (34) de la chambre - ou immédiatement derrière ladite sortie - le capteur comprenant une membrane (18) sélectivement perméable au gaz traceur (14).

**12.** Dispositif de détection de fuite selon la revendication 11, **caractérisé en ce que** la sortie de gaz de remplissage (34) est raccordée à un ventilateur extracteur (38).

**13.** Dispositif de détection de fuite selon la revendication 11 ou 12, **caractérisé en ce que** l'entrée de gaz de remplissage (33) est prévue d'un étranglement (36).

**14.** Dispositif de détection de fuite selon la revendication 11, **caractérisé en ce que** l'entrée de gaz de remplissage (33) est raccordée à un générateur de pression.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10031882 A1
- DE 102004034381
- DE 10304996 A1
- DE 2926112 A1
- US 5386717 A
- US 4419882 A
- US 2003047465 A1

**In der Beschreibung aufgeführte Nicht-Patentliteratur**

- Neue Norm zur Auswahl eines geeigneten Verfahrens zur Lecksuche und Dichtheitsprüfung. **Gerhard Schröder.** ZfP - Zeitung. April 2001, vol. 74, 31-39